# EUROPÄISCHE PATENTSCHRIFT

(11) **EP 2 363 563 B1**
(45) Veröffentlichungstag und Bekanntmachung des Hinweises auf die Patenterteilung: **15.02.2017**
(21) Anmeldenummer: 11156604.8
(22) Anmeldetag: 02.03.2011
(51) Int. Cl.: E06B 3/46, F16B 5/02, F16B 7/18, F16B 37/04, E05D 15/56

(54) **Montageelement für einen Festflügel einer Hebe-Schiebetür und Schiebetürprofilsystem**
Fitting element for a fixed leaf of a lifting sliding door and sliding door profile system
Elément de montage pour un battant fixe d'une porte coulissante levante et système de profilé de porte coulissante

(30) Priorität: 02.03.2010 DE 202010003093 U
(43) Veröffentlichungstag der Anmeldung: 07.09.2011
(73) Patentinhaber: Veka AG, 48324 Sendenhorst (DE)
(72) Erfinder: Brünemann, Dirk, 48324, Sendenhorst (DE)
(74) Vertreter: Tarvenkorn, Oliver

(56) Entgegenhaltungen:
- EP-A2- 1 626 148
- GB-A- 2 455 635
- US-A- 2 539 172
- US-A- 6 004 088

## Beschreibung

Die Erfindung betrifft ein Montageelement für einen Festflügel einer Hebe-Schiebetür.

Schiebetüren besitzen bei Eigenheimen meist zwei Flügel, von denen oftmals nur einer beweglich gelagert ist, wohingegen der andere zwar aus optischen Gründen gleichartig ausgebildet ist, jedoch fest mit dem Blendrahmen verbunden ist.

Zur Montage des fest stehenden Flügels ist es erforderlich, spezielle Distanzprofile vorzuhalten oder vor Ort Distanzelemente anzufertigen, die zwischen Flügel und Rahmen positioniert werden müssen, um den Flügel seitlich und oben dicht an den Rahmen schließen zu können und zugleich den festen Flügel auf gleicher Höhe zu positionieren wie den losen Flügel. Diese Montageweise, die individuelle Anpassungsarbeiten unter Baustellenbedingungen erfordert, ist zeitaufwendig und führt zu nicht reproduzierbaren Ergebnissen.

In der US 6 004 088 A ist ein Montageelement mit allen Merkmalen des Oberbegriffs von Anspruch 1 offenbart.

Aufgabe der Erfindung ist es somit, eine schnellere und präzise Montage des Festflügels einer Hebe-Schiebetür zu ermöglichen und dabei zu einer Material- und Kostenersparnis zu gelangen.

Gelöst wird diese Aufgabe gemäß einer ersten Ausführungsform der Erfindung durch ein Montageelement mit den Merkmalen des Anspruchs 1.

Die Erfindung sieht unter anderem vor, dass das Abstandshalterelement sowohl hochklappbar als auch in den Schraubkanal hineinklappbar ist, je nachdem von welcher Seite die Schraube eingeführt wird

Hierdurch werden die Abstandshalterelemente hochgeklappt, nachdem eine Schraube in den Schraubkanal eingeführt worden ist. Durch die hochgestellten Abstandshalterelemente ergibt sich eine Höhendifferenz ΔH zwischen der Oberkante der Abstandshalterelemente und der Oberkante des ersten Teilkörpers.

Andererseits kann auch eine Schraube in den Schraubkanal eingeführt werden, wodurch die Abstandshalterelemente in den Schraubkanal hineingeklappt worden sind. Infolgedessen eignet sich das erfindungsgemäße Montageelement auch für eine Montage an anderen Stellen, an denen keine Höhendifferenz ΔH zu überbrücken ist.

Erfindungswesentlich dabei ist auch, dass das Montageelement an seinem ersten Teilkörper zwei Anlagekanten aufweist, nämlich einmal diejenige, die durch die Oberseite oder Oberkante des ersten Teilkörpers selbst gebildet ist, und zum anderen eine zusätzliche Anlagekante, die durch das wenigstens eine Abstandshalterelement gebildet ist, wenn es aufgeklappt worden ist.

An der von dem ersten Teilkörper abgewandten Seite ist ein zweiter Teilkörper angeordnet, der ebenfalls in eine Montagenut am Schiebetürflügel und / oder an dem Bodenschwellenelement einsetzbar ist, wobei die für das Einsetzen des zweiten Teilkörpers bestimmte Montagenut auch einen andersartigen Querschnitt besitzen kann.

Vorzugsweise sind zwei Abstandshalterelemente vorgesehen, die an gegenüberliegenden Kanten des Schraubkanals angebunden sind.

Dadurch, dass die Abstandshalterelemente von der in den Schraubkanal eingeführten Schraube aufgerichtet werden, werden sie gleichzeitig auch durch die zwischen ihnen liegende Schraube abgestützt, so dass ein seitliches Wegknicken vermieden wird.

Eine Anbindung der Abstandshalterelemente über Filmscharniere ist vorteilhaft, da dann ein einstückiges Montageelement hergestellt werden kann, z.B. durch Spritzgießen.

Zu diesem Zweck ist es auch vorteilhaft, die Grund- und Teilkörper am Montageelement hohl auszubilden und eine offene Seite vorzusehen, so dass eine einfache Entformung aus einem Spritzgießwerkzeug möglich ist.

Mit den nicht ausgeklappten oder heraus geschobenen Abstandshalterelementen ist es zunächst möglich, den feststehenden Schiebetürflügel mit den an seiner Oberseite in das Flügelprofil eingesetzten Montageelementen zunächst in einer leicht schräg stehenden Stellung in die Montagenut oben am Blendrahmen einzuschieben. Dann kann der Festflügel in seine vertikale Montageposition verschwenkt werden. Schließlich lässt man den Festflügel in entsprechende Aufnahmen am Schwellenprofil hinein sacken. Dabei zieht sich der Festflügel samt den Montageelementen an seiner Oberseite aufgrund seines Eigengewichts wieder etwas aus der Montagenut heraus, bis er unten auf der Bodenschwelle aufsteht. Dadurch entsteht am Ende ein Luftspalt an der Oberseite des Festflügels, und zwar zwischen dem Grund der Montagenut und der Oberseite des Teilkörpers am Montageelement. Dieser Abstand wird mit dem erfindungsgemäßen Montageelement durch die ausgeklappten Abstandshalterelemente beim Festschrauben wieder überbrückt.

Da das Bodenschwellenelement vorzugsweise keilförmig ausgebildet ist und auch die Unterseite des Festflügels keilförmig ausgebildet ist bzw. ein keilförmiges Aufsatzprofil trägt, sind nur wenige Millimeter erforderlich, um den Flügel über vorstehende Rippen oder dergleichen im Schwellenbereich hinweg zu führen und dann wieder nach unten in die Endposition sacken zu lassen.

Dies bedeutet für die Montage des Festflügels im oberen Rahmenbereich, dass das Montageelement mit seinem ersten Teilkörper um eben diese Differenzhöhe wieder aus der Montagenut ausgerückt ist, und dass das Montageelement also nicht formschlüssig am Rahmenprofil anliegt. Eine Verschraubung von der Innenseite des Rahmens her durch das Montageelement hindurch würde dazu führen, dass der Festflügel durch die Schraube wieder angehoben würde, bis das Montageelement fest in der Nut liegt.

Durch die erfindungsgemäßen Abstandshalterelemente am Montageelement jedoch, die sich automatisch aufklappen oder herausschieben, wenn die Schraube in den Schraubkanal eingebracht wird, wird die für die Montage zunächst zwingend notwendige Höhendifferenz anschließend wieder überbrückt, und es wird über das Montagelement eine formschlüssige Verspannung des Flügels mit dem Rahmenprofil ermöglicht, ohne den Flügel partiell zu verformen oder anzuheben.

Die ersten und/oder zweiten Teilkörper des Montageelements sind vorzugsweise trapezförmig profiliert und verjüngen sich nach oben. Insbesondere schließen die schräg stehenden Flanken einen Winkel von etwa 10° ein. Dieser Winkel entspricht in etwa dem Winkel, in welchem der Schiebetürflügel bei der Montage gehalten wird, wenn er mit den an seiner Oberkante zuvor bereits eingesetzten Montageelementen in die Montagenut des Rahmens eingesetzt wird. Damit ist es möglich, den Schiebetürflügel auf einfache Weise zu montieren, ohne dass sich die Montageelemente verkanten.

Vorteilhaft ist es in diesem Zusammenhang, seitliche Blenden an den zweiten Teilkörper anschließen zu lassen, welche sich über einen Teil von dessen Höhe erstrecken, so dass durch die Blenden und den zweiten Teilkörper zusammen wieder eine gleichartige Querschnittskontur wie beim ersten Teilkörper gegeben ist.

Dadurch ist es möglich, mit dem gleichen Montageelement der Erfindung durch Wenden zwei verschiedene Funktionen zu erfüllen:
- An der Oberkante des Festflügels sowie an der dem Rahmen zugewandten Seitenkante des Flügels wird das Montageelement jeweils so in die Montagenut eingesetzt, dass der erste Teilkörper mit den Abstandshalterelementen nach außen weist, um in der beschriebenen Weise einen beim Montieren benötigten Spalt wieder überbrücken zu können.
- An der Unterkante hingegen wird das Montageelement um 180° gewendet eingesetzt, so dass die Abstandshalterelemente am ersten Teilkörper auf das Innere des Festflügels zu gerichtet sind. Wird nun eine Schraube in den Schraubkanal eingeführt, dann werden die Abstandshalterelemente in den Schraubkanal hinein gedrückt, so dass sie nicht störend wirken.

Zugleich kann der zweite Teilkörper an der gegenüber liegenden Seite des Montageelements passend zu dem Bodenschwellenelement oder einem für die Kopplung mit der Bodenschwelle vorgesehenen Aufsatzprofil ausgebildet sein.

Insbesondere können Rastvorsprünge vorgesehen sein, um das Montageelement im Aufsatzprofil bzw. im Bodenschwellenelement verrasten zu können. Wenn die Nut für die Verrastung des zweiten Teilkörpers schmaler ist als der Schraubkanal, so ist es vorteilhaft, den zweiten Teilkörper beidseits des Schraubkanals zu unterbrechen und zwei gleichartige Teilkörper beidseits des Schraubkanals anzuordnen.

Weiterhin vorzugsweise besitzen die Abstandshalterelemente an ihren der Schraube zugewandten Innenflächen Vorsprünge, mit denen die Abstandshalterelemente in die Gewindegänge der Schraube eingreifen.

Diese Vorsprünge sind insbesondere keilförmig ausgebildet. Die Keilform verhindert, dass die obere Kante der Abstandshalterelemente unter einen Gewindegang gerät, falls die Schraube einmal zurückgedreht werden sollte, wodurch das Abstandshalterelement abgerissen werden könnte.

Der besondere Vorteil der Erfindung ergibt sich bei einem Schiebetürprofilsystem mit den Merkmalen des Anspruchs 13.

Hierbei sind die im Bereich der Schwelle zusammenwirkenden Formschlusselemente in ihrer vertikalen Höhe so mit der Tiefe der Montagenut und der Höhe des jeweils daraus heraus ragenden Teils der Montageelemente an der Oberkante abgestimmt, dass bei der Montage des Schiebetürflügels dieser nur um eben jene vertikale Höhendistanz angehoben zu werden braucht, die dann anschließend wieder durch die Abstandshalterelemente des Montageelements ausgeglichen werden kann.

Beispielsweise kann an der Keilfläche an dem Bodenschwellenelement ein dünner, wenige Millimeter hoher Steg vorgesehen sein, der sich über die Länge des Bodenschwellenelements erstreckt. An der Unterseite der ebenfalls keilförmigen Fläche des Aufsatzprofils für den Festflügel ist eine zu dem Steg kompatible Nut eingebracht. Dadurch werden Festflügel und Bodenschwelle lagerichtig positioniert und gehalten, bis die Verschraubung abgeschlossen ist.

Die Erfindung wird nachfolgend mit Bezug auf die Zeichnung näher erläutert. Die Figuren zeigen:
- Fig. 1: ein Montageelement in Ansicht auf den ersten Teilkörper im Ausgangszustand in perspektivischer Ansicht;
- Fig. 2: ein Montageelement in Ansicht auf den zweiten Teilkörper in perspektivischer Ansicht;
- Fig. 3: ein Montageelement in Ansicht auf den ersten Teilkörper mit nach außen aufgestellten Abstandshalterelementen in perspektivischer Ansicht;
- Fig. 4: ein Montageelement in Ansicht auf den ersten Teilkörper mit nach innen eingeklappten Abstandshalterelementen in perspektivischer Ansicht;
- Fig. 5: einen Festflügel einer Hebe-Schiebetür im Schnitt und
- Fig. 6A, 6B: eine Hebe-Schiebetür in schematischer Schnittansicht, während und nach der Montage des Festflügels.

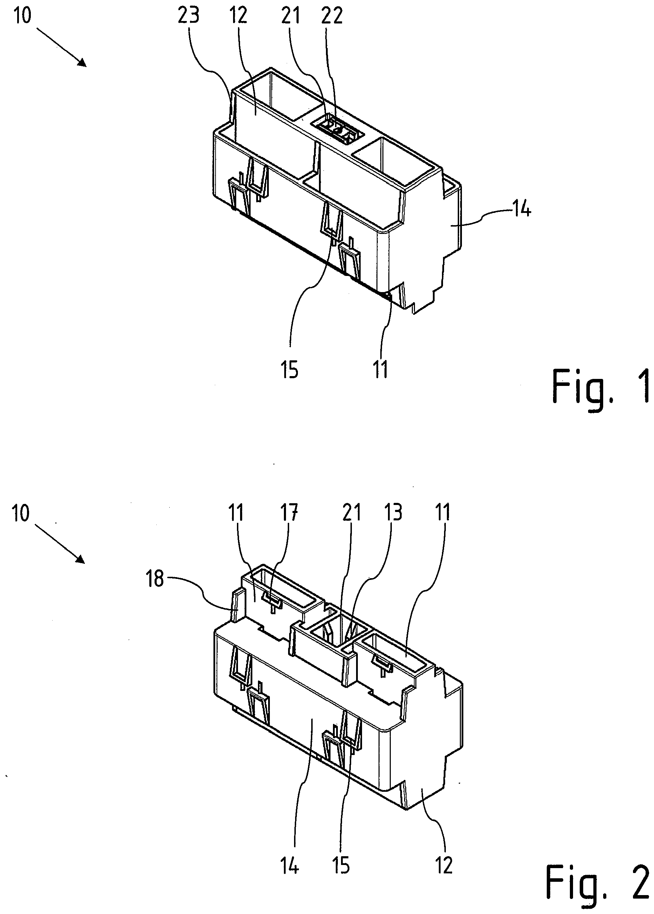

Figur 1 zeigt ein Montageelement 10 in perspektivischer Ansicht. Es umfasst in der Mitte einen quaderförmigen Grundkörper 14, der seitliche Rastvorsprünge 15 aufweist. Die Rastvorsprünge dienen dazu, dass Montageelement 10 in einer Montagenut an einem Rahmen- oder Flügelprofil einrasten zulassen, wozu in dieser Montagenut ein Rastvorsprung, beispielsweise ein dünner Steg, vorhanden ist.

Der Grundkörper 10 kann auch hohl ausgebildet sein, wie insbesondere das ganze Montageelement 10 so ausgebildet ist, dass es durch Spritzgießen einfach und Material sparend herzustellen ist.

Oben auf dem Grundkörper 14 ist ein erster Teilkörper 12 ausgebildet, dessen Breite geringer ist als die des Grundkörpers 14. Auch der Teilkörper 12 enthält ausgehöhlte und in Entformungsrichtung offene Bereiche.

In der Mitte des Montageelements 10 angeordnet ist ein Schraubkanal 21, der sich über die gesamte Höhe des Montageelements 10 erstreckt. Dort, wo der Schraubkanal 21 an der Oberseite des ersten Teilkörper 12 mündet, sind zwei Abstandshalterelemente 22 gelenkig an den ersten Teilkörper 12 angebunden. Die beiden Abstandshalterelemente 22 verschließen den Schraubkanal 21 wie zwei Fensterläden an einem Fenster.

Eine endseitig angeformte Blende 23 gibt dem ersten Teilkörper die für die Montage günstige trapezförmige Kontur und ist als eine bloße Rippe bei einem als Spritzgussteil ausgebildeten Montageelement 10 leicht herzustellen.

Figur 2 zeigt das Montageelement 10 von der anderen Seite her. An dieser Seite sind auf den Grundkörper 14 gleich zwei zweite Teilkörper 11 aufgesetzt. Zwischen den beiden Teilkörpern 11 befindet sich der Schraubkanal 21.

Sichtbar sind in Figur 2 auch die im Schraubkanal 21 vorhandenen Führungsrippen 13, die dazu dienen, eine eingesteckte Schraube klemmend zu halten, bevor die Verschraubung erfolgt, und die Schraube später, während des Verschraubens, zu zentrieren.

Rastvorsprünge 17 an den zweiten Teilkörpern 11 ermöglichen eine Verrastung mit Aufsatzprofilen des Festflügels oder eine Festlegung des Montageelements, noch bevor die Verschraubung vorgenommen wird. Auch sind seitliche Blenden 18 vorgesehen, wie am ersten Teilkörper 12 auch.

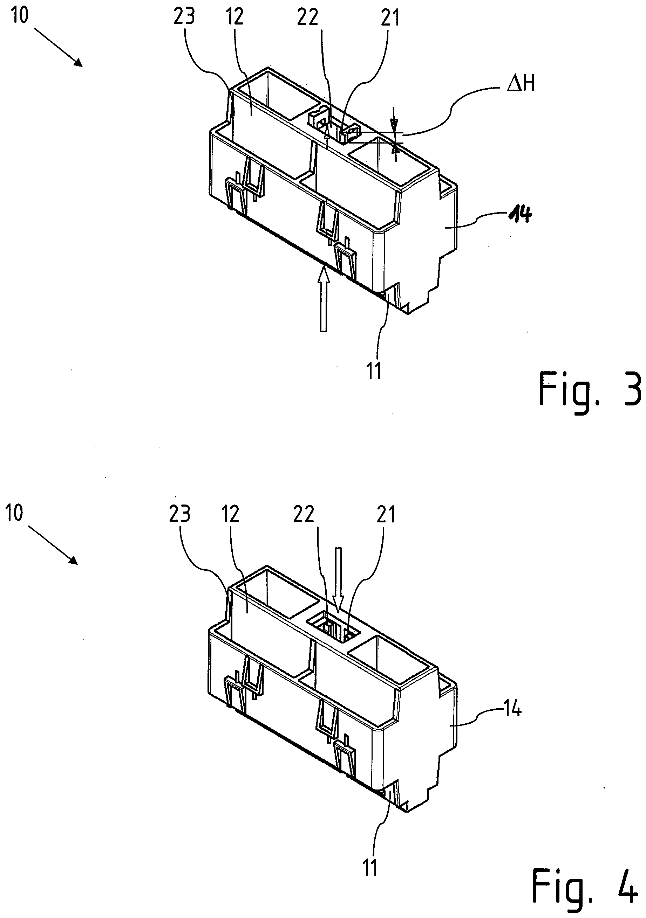

Figur 3 zeigt das Montageelement 10 wieder mit Blick auf den ersten Teilkörper 12, ähnlich zu Figur 1. Die Abstandshalterelemente 22 sind hochgeklappt, nachdem in der mit dem Blockpfeil angedeuteten Richtung eine Schraube in den Schraubkanal 21 eingeführt worden ist. Durch die hoch gestellten Abstandshalterelemente 22 ergibt sich eine Höhendifferenz ΔH zwischen der Oberkante der Abstandshalterelemente 22 und der Oberkante des ersten Teilkörpers 12.

Figur 4 zeigt das Montageelement 10 wieder in der gleichen Perspektive wie in den Figuren 1 und 3. In dem dargestellten Zustand ist von oben her, in der mit dem Blockpfeil angedeuteten Richtung, eine Schraube in den Schraubkanal 21 eingeführt worden, wodurch die Abstandshalterelemente 22 in den Schraubkanal 21 hinein geklappt worden sind. Damit eignet sich das Montageelement 10 auch für eine Montage an anderen Stellen, an denen keine Höhendifferenz ΔH zu überbrücken ist.

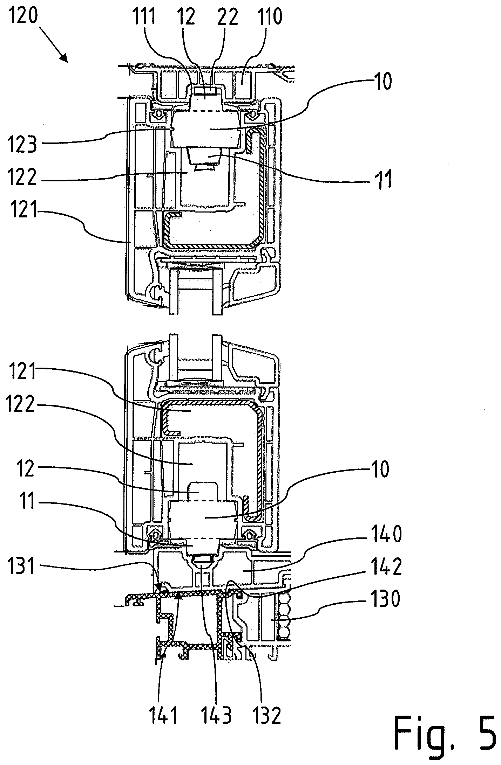

Figur 5 zeigt einen fertig montierten Festflügel 120 einer Hebe-Schiebetür. Im oberen Bereich ist bauseitig ein Rahmenprofil 110 vorhanden, welches eine Montagenut 111 aufweist.

Ein Flügelprofil 121 weist ebenfalls eine Montagenut 122 auf, die über ihre Höhe zwei verschieden breite Bereiche besitzt. In dem oberen, breiteren Bereich der Montagenut ist ein nach innen ragender Raststeg 123 angeformt, über welchen das Montageelement 10 mit seinen Rastvorsprüngen 15 arretierbar ist.

Der obere Teilkörper 12 des Montageelements 10 ragt bis in die Montagenut 111 des Rahmenprofils 110. Die Abstandshalterelemente 22 sind aufgestellt und stützen das Montageelement 10 am Grund der Montagenut 111 ab.

Im unteren Bereich des Rahmens ist ein gleichartiges Rahmenprofil 121 verbaut. Ein weiteres Montageelement 10 ist hier genau umgekehrt eingesetzt, so dass dessen erster Teilkörper 12 in den leeren Bereich der großen Montagenut 122 im Rahmenprofil 121 hineinragt. Unten ragt der zweite Teilkörper 11 aus dem Rahmenprofil 121 heraus. Er greift in eine Nut 143 eines Aufsatzprofils 140 ein, über welches eine Verbindung zu einem Bodenschwellenelement 130 hergestellt wird.

Eine als Keilfläche 141 ausgebildet Unterseite des Aufsatzprofils 140 läuft im selben Winkel schräg zu wie eine Keilfläche 131 an der Oberseite des Bodenschwellenelements 130.

An den Keilflächen 131, 141 sind formschlüssige Elemente vorhanden, die ineinander greifen. Im dargstellten Ausführungsbeispiel handelt es sich um einen Profilsteg 132 an dem Bodenschwellenelement 130 und eine Nut 142 an der Unterseite des Aufsatzprofils 140. Die Elemente 132, 142 stellen eine exakte Positionierung der Elemente 130, 140 zueinander sicher und verhindern ein Abgleiten des Aufsatzprofils 140 von dem Bodenschwellenelement 130 während der Montage.

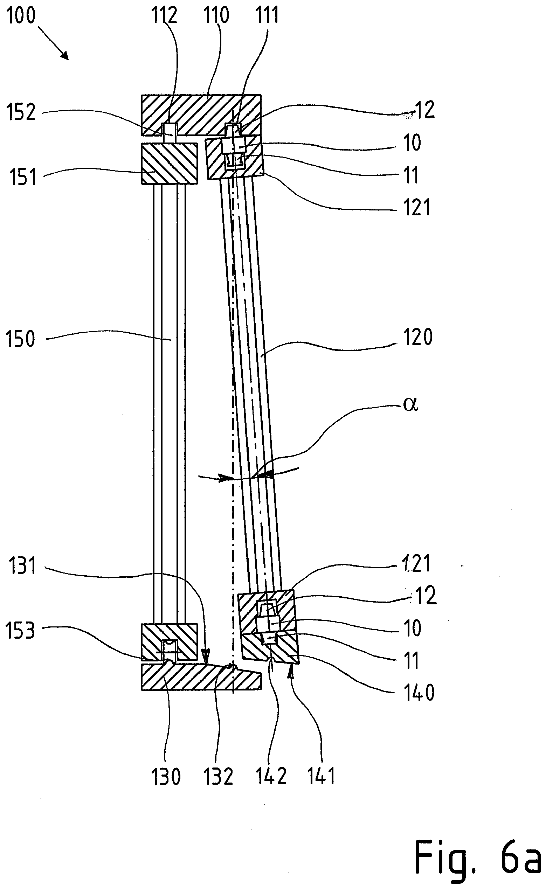

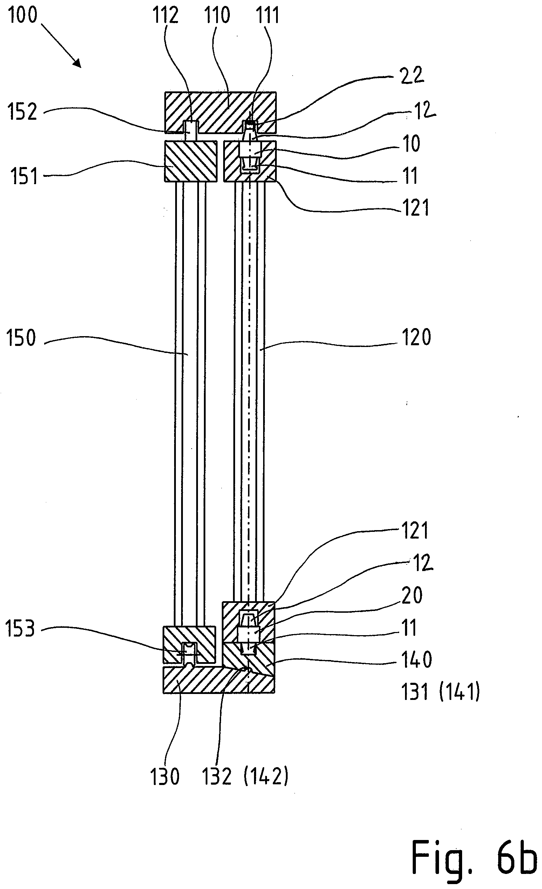

Unter Bezug auf die Figuren 6a, 6b wird die Montage eines Festflügels 120 einer Hebe-Schiebetür 100 mithilfe der erfindungsgemäßen Montageelemente 10 erläutert.

Zur Vorbereitung der Montage des Festflügels 120 werden zunächst folgende Schritte durchgeführt:
- An der Unterseite des Festflügels 120 werden mehrere erfindungsgemäße Montageelemente 10 in gewendeter Stellung eingerastet, so dass die jeweiligen zweiten Teilkörper 11 nach unten herausragen. Dabei können Befestigungsbohrungen und -schrauben am Flügelprofil 121 schon vorbereitet werden, da diese sicher durch die kreuz- oder sternförmig ausgerichteten Führungsstege 13 im Schraubkanal 21 gehalten werden, auch wenn die Schrauben erst einmal nur eingesteckt worden sind.
- Danach wird an der Unterseite des Festflügels 120 das Aufsatzprofil 140 auf die Rastvorsprünge 17 am zweiten Teilkörper 11 der Montageelemente 10 aufgerastet.
- In einem weiteren Vorbereitungsschritt werden oben und seitlich am Festflügel die Montageelemente 10 in die Montagenut 122 des Flügelprofils 121 eingesetzt. Auch hierbei können die Befestigungsbohrungen im Flügelprofil 121 schon vorbereitet und die Schrauben schon in die Montageelemente 10 eingesteckt werden.

Die eigentliche Montage des Festflügels 120 bei der Hebe-Schiebetür 100 unter Zuhilfenahme der erfindungsgemäßen Montageelemente 10 wird dann wie folgt vorgenommen:
- Der Festflügel 120 wird, wie in Figur 6A abgebildet, in einem kleinen Winkel α leicht schräg gehalten, und in dieser Winkelausrichtung mit den über seine Oberkante hinaus ragenden ersten Teilkörpern 12 der Montageelemente 10 in eine sich nach unten öffnende Montagenut 111 am Rahmenprofil 110 eingeschoben.
- Der Festflügel 120 wird dann mit seinem unten anhängenden Aufsatzprofil 140 über den Raststeg 132 des Bodenschwellenelements 130 hinweg in eine vertikale Lage geschwenkt, welche in Fig. 6B gezeigt ist
- Man lässt den Festflügel 120 sacken, so dass die Nut 142 an der Unterseite des Aufsatzprofils 140 den Steg 132 des Bodenschwellenelements 130 umfasst bzw. andere formschlüssige Elemente dort ineinander greifen.
- Der Festflügel 120 wird abschließend an der Oberseite und seitlich über die dazwischen liegenden Montageelemente 10, deren Abstandshalterelemente 22 sich ausklappen, mit dem Rahmenprofil 110 verschraubt. Die Abstandshalterelemente 22 klappen sich aus und überbrücken den Abstand zwischen der Oberseite des Montageelements und dem Grund der Montagenut spielfrei.

Davon unabhängig ist die Funktion eines benachbarten losen Flügels 150, der in der angehobenen Stellung auf Rollen 153 auf dem Bodenschwellenelement 130 verschiebbar ist. Dabei ist über ein Führungselement 152 gestützt, welches an der Oberseite des Flügelprofils 151 angebracht ist und in einer zweiten Nut 112 im Rahmenprofil 110 geführt ist.

Davon unabhängig ist die Funktion eines benachbarten losen Flügels 150, der in der angehobenen Stellung auf Rollen 153 auf dem Bodenschwellenelement 130 verschiebbar ist. Dabei ist über ein Führungselement 152 gestützt, welches an der Oberseite des Flügelprofils 151 angebracht ist und in einer zweiten Nut 112 im Rahmenprofil 110 geführt ist.

## Patentansprüche

1. Montageelement (10) für einen feststehenden Schiebetürflügel
- mit einem Grundkörper (14) mit wenigstens einem ersten Teilkörper (12), der in eine Montagenut (111, 121) in einem Rahmen- und/oder Flügelprofil (110, 120) einsetzbar ist und dessen Breite geringer ist als die des Grundkörpers (14) ist,
- wobei an einer von dem ersten Teilkörper (12) abgewandten Seite des Grundkörpers (14) wenigstens ein zweiter Teilkörper (11) angeordnet ist.
- mit einem Schraubkanal (21), der sich durch das Montageelement (10) hindurch erstreckt,
- wobei an dem ersten Teilkörper (12) wenigstens ein Abstandshalterelement (22) gelenkig angebunden ist, das sich in einer Ausgangslage bis in die Mündung des Schraubkanals (21) erstreckt und das mit einer in den Schraubkanal (21) einzubringenden Schraube aufrichtbar ist,
- **dadurch gekennzeichnet**, das das Abstandshalterelement (22) durch Einführen einer Schraube in den Schraubkanal (21) von dem zweiten Teilkörper (11) her hochklappbar ist und sich zwischen der Oberkante des hochgestellten Abstandshalterelements (22) und der Oberkante des ersten Teilkörpers 12 eine Höhendifferenz ΔH einstellt;
- und dass durch Einführen einer Schraube in den Schraubkanal (21) von dem ersten Teilkörper (12) her das Abstandshalterelement (22) in den Schraubkanal (21) hinein klappbar ist.

2. Montageelement (10) nach Anspruch 1, **dadurch gekennzeichnet, dass** an gegenüberliegenden Kanten an einer Mündung des Schraubkanals (21) jeweils ein Abstandshalterelement (22) angebunden ist.

3. Montageelement nach Anspruch 1 oder 2, **dadurch gekennzeichnet, dass** die Abstandshalterelemente (22) jeweils über Filmscharniere angebunden sind.

4. Montageelement nach wenigstens einem der Ansprüche 1 bis 3, **dadurch gekennzeichnet, dass** die Abstandshalterelemente (22) an ihrer der Schraube zugewandten Innenfläche jeweils wenigstens einen Vorsprung aufweisen.

5. Montageelement nach wenigstens einem der Ansprüche 1 bis 4, **dadurch gekennzeichnet, dass** der Grundkörper (14) an gegenüberliegenden Seitenflächen Rastvorsprünge (15) aufweist.

6. Montageelement (10) nach wenigstens einem der Ansprüche 1 bis 5, **dadurch gekennzeichnet, dass** im Schraubkanal (21) mehrere auf dessen Zentrum gerichtete Führungsrippen (13) für eine Schraube angeordnet sind.

7. Montageelement nach wenigstens einem der Ansprüche 1 bis 6, **dadurch gekennzeichnet, dass** auf derselben Seite des Grundkörpers (14) beidseits des Schraubkanals (21) jeweils ein erster Teilkörper (12) bzw. jeweils ein zweiter Teilkörper (12) angeordnet ist.

8. Montageelement nach wenigstens einem der Ansprüche 1 bis 7, **dadurch gekennzeichnet, dass** die ersten und/oder die zweiten Teilkörper (12, 11) in einem Schnitt quer zur Längsrichtung trapezförmig sind und sich nach außen verjüngen.

9. Montageelement nach wenigstens einem der Ansprüche 1 bis 8, **dadurch gekennzeichnet, dass** sich an den ersten und/oder an den zweiten Teilkörper (12, 11) seitliche Blenden (22) anschließen, welche zusammen mit dem jeweiligen Teilkörper in einem Schnitt quer zur Längsrichtung eine trapezförmige Kontur bilden, welche sich nach außen verjüngt.

10. Schiebetürprofilsystem, wenigstens umfassend:
- ein Rahmenprofil (120) mit wenigstens einer Montagenut (121),
- ein Bodenschwellenprofil (130),
- ein Aufsatzprofil (140) mit einer Montagenut (143),
- einem Montageelement (10) nach wenigstens einem der vorhergehenden Ansprüche,
wobei das Bodenschwellprofil (130) und das Aufsatzprofil (140) jeweils im Querschnitt keilförmig ausgebildet sind und an ihren Keilflächen (131, 141) durch ineinander greifende Formschlusselemente (132, 142) miteinander kombinierbar sind,
und dass der vertikale Überstand der aufgerichteten Abstandshalterelemente (22) über dem ersten Teilkörper (12) des Montageelements (10) größer ist als oder gleich ist wie die vertikale Erstreckung der aufragenden Formschlusselemente (132) an der Bodenschwelle (130) und/oder an dem Aufsatzprofil (140).

11. Schiebetürprofilsystem nach Anspruch 10, **dadurch gekennzeichnet, dass** der zweite Teilkörper (11) Rastvorsprünge (17) aufweist, mit denen er in einem mit dem Bodenschwellenprofil (130) koppelbaren Aufsatzprofil (140) einrastbar ist.

## Claims

1. Mounting element (10) for a fixed sliding door leaf
- having a main body (14) with at least one first part body (12) which can be inserted into a mounting groove (111, 121) in a frame and/or leaf profile (110, 120) and the width of which is smaller than that of the main body (14),
- at least one second part body (11) being arranged on a side of the main body (14) which faces away from the first part body (12),
- having a bolt channel (21) which extends through the mounting element (10),
- at least one spacer element (22) being attached to the first part body (12) in an articulated manner, which spacer element (22) extends in a starting position as far as the opening of the bolt channel (21) and can be erected by way of a bolt to be introduced into the bolt channel (21),
**characterized in that** the spacer element (22) can be folded up from the second part body (11) by way of the introduction of a bolt into the bolt channel (21), and a height difference ΔH is set between the upper edge of the raised spacer element (22) and the upper edge of the first part body (12); and **in that** the spacer element (22) can be folded into the bolt channel (21) by way of the introduction of a bolt into the bolt channel (21) from the first part body (12).

2. Mounting element (10) according to Claim 1, **characterized in that** in each case one spacer element (22) is attached on opposite edges at an opening of the bolt channel (21).

3. Mounting element according to Claim 1 or 2, **characterized in that** the spacer elements (22) are attached in each case via integral hinges.

4. Mounting element according to at least one of Claims 1 to 3, **characterized in that** the spacer elements (22) have in each case at least one projection on the inner face which faces the bolt.

5. Mounting element according to at least one of Claims 1 to 4, **characterized in that** the main body (14) has latching projections (15) on opposite side faces.

6. Mounting element (10) according to at least one of Claims 1 to 5, **characterized in that** a plurality of guide ribs (13) for a bolt which are directed toward the centre of the bolt channel (21) are arranged in the said bolt channel (21).

7. Mounting element according to at least one of Claims 1 to 6, **characterized in that** in each case one first part body (12) and in each case one second part body (12) are arranged on the same side of the main body (14) on both sides of the bolt channel (21).

8. Mounting element according to at least one of Claims 1 to 7, **characterized in that** the first and/or the second part bodies (12, 11) are trapezoidal in a section transversely with respect to the longitudinal direction, and taper towards the outside.

9. Mounting element according to at least one of Claims 1 to 8, **characterized in that** the first and/or the second part body (12, 11) are/is adjoined by lateral orifices (22) which, together with the respective part body, form a trapezoidal contour in a section transversely with respect to the longitudinal direction, which trapezoidal contour tapers towards the outside.

10. Sliding door profile system, at least comprising:
- a frame profile (120) with at least one mounting groove (121),
- a ground sill profile (130),
- an attachment profile (140) with a mounting groove (143),
- a mounting element (10) according to at least one of the preceding claims,
the ground sill profile (130) and the attachment profile (140) being in each case of wedge-shaped configuration in cross section, and being capable of being combined with one another by way of positively locking elements (132, 142) which engage into one another on the wedge surfaces (131, 141) thereof, and the vertical projecting length of the erected spacer elements (22) beyond the first part body (12) of the mounting element (10) being greater than or equal to the vertical extent of the upwardly protruding positively locking elements (132) on the ground sill (130) and/or on the attachment profile (140).

11. Sliding door profile system according to Claim 10, **characterized in that** the second part body (11) has latching projections (17), by way of which it can be latched into an attachment profile (140) which can be coupled to the ground sill profile (130).

## Revendications

1. Élément de montage (10) pour un battant fixe d'une porte coulissante,
- un corps de base (14) avec au moins un premier corps partiel (12) qui peut être inséré dans une rainure de montage (111, 121) dans un profilé de cadre et/ou de battant (110, 120) et dont la largeur est inférieure à celle du corps de base (14),
- au moins un deuxième corps partiel (11) étant disposé au niveau d'un côté du corps de base (14) opposé au premier corps partiel (12),
- comprenant un canal de vissage (21) qui s'étend à travers l'élément de montage (10),
- au moins un élément d'espacement (22) étant relié de manière articulée au premier corps partiel (12), lequel s'étend dans une position de départ jusque dans l'embouchure du canal de vissage (21) et peut être redressé avec une vis à introduire dans le canal de vissage (21),
**caractérisé en ce que**
- l'élément d'espacement (22) peut être rabattu vers le haut par introduction d'une vis dans le canal de vissage (21) depuis le deuxième corps partiel (11) et une différence de hauteur ΔH s'établit entre le bord supérieur de l'élément d'espacement redressé (22) et le bord supérieur du premier corps partiel (12) ;
- et **en ce que** par introduction d'une vis dans le canal de vissage (21) depuis le premier corps partiel (12), l'élément d'espacement (22) peut être rabattu dans le canal de vissage (21).

2. Élément de montage (10) selon la revendication 1, **caractérisé en ce qu'**un élément d'espacement (22) est à chaque fois relié à une embouchure du canal de vissage (21) au niveau de bords opposés.

3. Élément de montage selon la revendication 1 ou 2, **caractérisé en ce que** les éléments d'espacement (22) sont à chaque fois reliés par le biais de charnières à film.

4. Élément de montage selon au moins l'une quelconque des revendications 1 à 3, **caractérisé en ce que** les éléments d'espacement (22) présentent au niveau de leur surface interne tournée vers la vis à chaque fois au moins une saillie.

5. Élément de montage selon au moins l'une quelconque des revendications 1 à 4, **caractérisé en ce que** le corps de base (14) présente des saillies d'encliquetage (15) au niveau de surfaces latérales opposées.

6. Élément de montage (10) selon au moins l'une quelconque des revendications 1 à 5, **caractérisé en ce que** dans le canal de vissage (21) sont disposées plusieurs nervures de guidage (13) orientées vers son centre pour une vis.

7. Élément de montage selon l'une quelconque des revendications 1 à 6, **caractérisé en ce qu'**à chaque fois un premier corps partiel (12) ou à chaque fois un deuxième corps partiel (12) est disposé sur le même côté du corps de base (14) de chaque côté du canal de vissage (21).

8. Élément de montage selon au moins l'une quelconque des revendications 1 à 7, **caractérisé en ce que** les premiers et/ou les deuxièmes corps partiels (12, 11) sont de forme trapézoïdale en coupe transversale à la direction longitudinale et se rétrécissent vers l'extérieur.

9. Élément de montage selon au moins l'une quelconque des revendications 1 à 8, **caractérisé en ce que** des bandeaux latéraux (22) se raccordent au premier et/ou au deuxième corps partiel (12, 11), et forment conjointement avec le corps partiel respectif en coupe transversale à la direction longitudinale un contour trapézoïdal qui se rétrécit vers l'extérieur.

10. Système de profilé pour portes coulissantes, comprenant au moins :
- un profilé de cadre (120) comprenant au moins une rainure de montage (121),
- un profilé de seuil (130),
- un profilé d'arrêt (140) avec une rainure de montage (143),
- un élément de montage (10) selon au moins l'une quelconque des revendications précédentes,
le profilé de seuil (130) et le profilé d'arrêt (140) étant à chaque fois réalisés en forme de coin en section transversale et pouvant être combinés l'un avec l'autre au niveau de leurs surfaces de coin (131, 141) par des éléments d'engagement par correspondance de formes s'engageant l'un dans l'autre (132, 142),
et en ce que le dépassement vertical des éléments d'espacement redressés (22) au-delà du premier corps partiel (12) de l'élément de montage (10) est supérieur ou égal à l'étendue verticale des éléments d'engagement par correspondance de formes saillants (132) au niveau du seuil (130) et/ou au niveau du profilé d'arrêt (140).

11. Système de profilé pour portes coulissantes selon la revendication 10, **caractérisé en ce que** le deuxième corps partiel (11) présente des saillies d'encliquetage (17) avec lesquelles il peut être encliqueté dans un profilé d'arrêt (140) pouvant être accouplé au profilé de seuil (130).
